(19) **Europäisches Patentamt / European Patent Office / Office européen des brevets**

(11) **EP 4 569 508 B1**

(12) **EUROPEAN PATENT SPECIFICATION**

(45) Date of publication and mention
of the grant of the patent:
**06.05.2026 Bulletin 2026/19**

(21) Application number: **22785884.2**

(22) Date of filing: **07.09.2022**

(51) International Patent Classification (IPC):
$G10L\ 15/16^{(2006.01)}$     $G10L\ 15/26^{(2006.01)}$
$G10L\ 15/193^{(2013.01)}$     $G06N\ 3/02^{(2006.01)}$

(52) Cooperative Patent Classification (CPC):
**G10L 15/16; G10L 15/193; G10L 15/26;**
G06N 3/044; G06N 3/09

(86) International application number:
**PCT/US2022/076074**

(87) International publication number:
**WO 2024/054229 (14.03.2024 Gazette 2024/11)**

(54) **SEAMLESS SPELLING FOR AUTOMATIC SPEECH RECOGNITION SYSTEMS**

NAHTLOSES BUCHSTABIEREN FÜR AUTOMATISCHE SPRACHERKENNUNGSSYSTEME

ÉPELLATION SANS INTERRUPTION POUR SYSTÈMES DE RECONNAISSANCE VOCALE AUTOMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.06.2025 Bulletin 2025/25**

(73) Proprietor: **Google LLC**
**Mountain View, CA 94043 (US)**

(72) Inventors:
• **SIM, Khe Chai**
**Mountain View, California 94043 (US)**

• **BEAUFAYS, Françoise**
**Mountain View, California 94043 (US)**
• **STROHMAN, Trevor**
**Mountain View, California 94043 (US)**
• **ZIVKOVIC, Dan**
**Mountain View, California 94043 (US)**

(74) Representative: **Shipp, Nicholas**
**Kilburn & Strode LLP**
**Lacon London**
**84 Theobalds Road**
**London WC1X 8NL (GB)**

(56) References cited:
**US-A1- 2017 263 248**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

This disclosure relates to providing seamless spelling for automatic speech recognition (ASR) systems.

BACKGROUND

ASR systems provide a technology that is typically used in mobile devices and/or other devices. In general, ASR systems attempt to provide accurate transcriptions of what a user speaks to a device. However, in some instances, ASR systems may generate transcriptions that do not match what the user intended or actually spoke.

US2017263248A1 describes an electronic device which implements dictation-based editing of textual data. The device receives a natural-language user input and determines whether the natural-language user input includes a predefined editing command. If the natural-language user input includes the predefined editing command, the device modifies the textual data in accordance with the predefined editing command. If the natural-language user input does not include the predefined editing command, the device transcribes the natural-language user input and adds the transcribed text to the textual data.

SUMMARY

One aspect of the present disclosure provides a computer-implemented method that, when executed on data processing hardware, causes the data processing hardware to perform operations that include receiving audio data characterizing an utterance spoken by a user and processing, using an automatic speech recognition (ASR) model, the audio data to generate an initial transcription for the utterance. The utterance includes a particular phrase and a sequence of characters that provide a correct spelling of the particular phrase spoken after the particular phrase. The initial transcription includes a misrecognition of the particular phrase by the ASR model followed by the sequence of individual characters that provide the correct spelling of the particular phrase. The operations also include detecting a spelling structure in the initial transcription subsequent to the misrecognition of the particular phrase. In response to detecting the spelling structure in the initial transcription, the operations also include extracting, from the initial transcription, the sequence of individual characters that provide the correct spelling of the particular phrase, constructing a corrected phrase for the misrecognition of the particular phrase from the extracted sequence of individual characters, extracting, from the initial transcription, the misrecognition of the particular phrase, and normalizing the initial transcription to obtain a final transcription for the utterance by replacing the extracted misrecognition of the particular phrase with the corrected phrase constructed from the extracted sequence of individual characters.

Implementations of the present disclosure include one or more of the following optional features. In some implementations, receiving the audio data includes receiving the audio data as the user speaks the utterance, performing speech recognition on the audio data includes performing streaming speech recognition on the audio data as the audio data is received to generate, as output from the ASR model, streaming speech recognition result. In these implementations, the operations also include providing each streaming speech recognition result generated as output from the ASR model for display on a screen in communication with the data processing hardware.

In some examples, the operations also include displaying a partial speech recognition result including the misrecognition of the particular phrase on the screen before the user speaks the sequence of individual characters comprising the spelling of the particular phrase. In all implementations, detecting the spelling structure includes executing a weighted finite state transducer (wFST) having a spelling component configured to detect the spelling structure in the initial transcription by identifying one or more spell trigger words in the initial transcription subsequent to the misrecognition of the particular phrase and/or one or more initiating trigger words preceding the misrecognition of the particular phrase. The one or more initiating trigger words and the one or more spell trigger words may form a predefined spell command.

In some examples, the operations also include, after constructing the corrected phrase from the extracted sequence of individual characters, applying a capitalization normalizer to capitalize a first letter of at least one word in the corrected phrase. The misrecognition of the particular phrase may include one or more words. Optionally, extracting the misrecognition of the particular phrase may be based on an edit distance between the sequence of individual characters in the initial transcription and the misrecognition of the particular phrase.

In some implementations, the particular phrase spoken by the user in the utterance includes two or more particular words, the sequence of individual characters that provide the correct spelling of the particular phrase includes two or more spans of consecutive individual characters that each provide a correct spelling for a corresponding one of the two or more particular words, and the utterance spoken by the user further includes the user speaking a space command between each adjacent pair of the two or more spans of consecutive individual characters. In these implementations, the initial transcription may further include a space token inserted between each adjacent pair of the two or more spans of consecutive individual characters of the sequence of individual characters, and constructing the corrected phrase from the extracted sequence of individual characters may include: for each span of consecutive individual characters, joining the individual characters to form the corresponding one of the two or more particular words; and replacing each space token in the initial transcription with a blank space.

In some examples, extracting the misrecognition of the particular phrase includes determining a corresponding edit distance between the sequence of individual characters and each word span of multiple word spans of different lengths in the initial transcription and identifying the word span of the multiple word spans of different lengths that has a shortest corresponding edit distance to the misrecognition of the particular phrase. The multiple word spans precede the sequence of individual characters. In these examples, the corresponding edit distance may include a corresponding Levenshtein distance dynamically computed for each of the multiple word spans via a single calculation. Additionally or alternatively, detecting the spelling structure in the initial transcription and normalizing the initial transcription to obtain the final transcription may occur without receiving any user input after the user finishes speaking the utterance.

Another aspect of the present disclosure provides a system that includes data processing hardware and memory hardware in communication with the data processing hardware and storing instructions that, when executed on the data processing hardware, cause the data processing hardware to perform operations that include receiving audio data characterizing an utterance spoken by a user and processing, using an automatic speech recognition (ASR) model, the audio data to generate an initial transcription for the utterance. The utterance includes a particular phrase and a sequence of characters that provide a correct spelling of the particular phrase spoken after the particular phrase. The initial transcription includes a misrecognition of the particular phrase by the ASR model followed by the sequence of individual characters that provide the correct spelling of the particular phrase. The operations also include detecting a spelling structure in the initial transcription subsequent to the misrecognition of the particular phrase. In response to detecting the spelling structure in the initial transcription, the operations also include extracting, from the initial transcription, the sequence of individual characters that provide the correct spelling of the particular phrase, constructing a corrected phrase for the misrecognition of the particular phrase from the extracted sequence of individual characters, extracting, from the initial transcription, the misrecognition of the particular phrase, and normalizing the initial transcription to obtain a final transcription for the utterance by replacing the extracted misrecognition of the particular phrase with the corrected phrase constructed from the extracted sequence of individual characters.

Implementations of the present disclosure include one or more of the following optional features. In some implementations, receiving the audio data includes receiving the audio data as the user speaks the utterance, performing speech recognition on the audio data includes performing streaming speech recognition on the audio data as the audio data is received to generate, as output from the ASR model, streaming speech recognition result. In these implementations, the operations also include providing each streaming speech recognition result generated as output from the ASR model for display on a screen in communication with the data processing hardware.

In some examples, the operations also include displaying a partial speech recognition result including the misrecognition of the particular phrase on the screen before the user speaks the sequence of individual characters comprising the spelling of the particular phrase. In all implementations, detecting the spelling structure includes executing a weighted finite state transducer (wFST) having a spelling component configured to detect the spelling structure in the initial transcription by identifying one or more spell trigger words in the initial transcription subsequent to the misrecognition of the particular phrase and/or one or more initiating trigger words preceding the misrecognition of the particular phrase. The one or more initiating trigger words and the one or more spell trigger words may form a predefined spell command.

In some examples, the operations also include, after constructing the corrected phrase from the extracted sequence of individual characters, applying a capitalization normalizer to capitalize a first letter of at least one word in the corrected phrase. The misrecognition of the particular phrase may include one or more words. Optionally, extracting the misrecognition of the particular phrase may be based on an edit distance between the sequence of individual characters in the initial transcription and the misrecognition of the particular phrase.

In some implementations, the particular phrase spoken by the user in the utterance includes two or more particular words, the sequence of individual characters that provide the correct spelling of the particular phrase includes two or more spans of consecutive individual characters that each provide a correct spelling for a corresponding one of the two or more particular words, and the utterance spoken by the user further includes the user speaking a space command between each adjacent pair of the two or more spans of consecutive individual characters. In these implementations, the initial transcription may further include a space token inserted between each adjacent pair of the two or more spans of consecutive individual characters of the sequence of individual characters, and constructing the corrected phrase from the extracted sequence of individual characters may include: for each span of consecutive individual characters, joining the individual characters to form the corresponding one of the two or more particular words; and replacing each space token in the initial transcription with a blank space.

In some examples, extracting the misrecognition of the particular phrase includes determining a corresponding edit distance between the sequence of individual characters and each word span of multiple word spans of different lengths in the initial transcription and identifying the word span of the multiple word spans of different lengths that has a shortest corresponding edit distance to the misrecognition of the particular phrase. The multiple word spans precede the sequence of individual characters. In these examples, the corresponding edit distance may include a corresponding Levenshtein distance dynamically computed for each of the multiple word spans via a single calculation. Additionally or alternatively, detecting the spelling structure in the initial transcription and normalizing the initial transcription to obtain the final transcription may occur without receiving any user input after the user finishes speaking the utterance

The details of one or more implementations of the disclosure are set forth in the accompanying drawings and the description below. Other aspects, features, and advantages will be apparent from the description and drawings, and from the claims.

DESCRIPTION OF DRAWINGS

FIG. 1 is a schematic view of an example system for providing seamless spelling for automatic speech recognition (ASR) systems.

FIGS. 2A and 2B are schematic views of diagrams that illustrate examples of word lattices.

FIG. 3 is a schematic view of diagrams that illustrate an example spelling component of a finite state transducer for seamlessly detecting spelling structures.

FIG. 4 is a table of example Levenshtein distances between sub-strings.

FIG. 5 is a flowchart of an exemplary arrangement of operations for a method of providing seamless spelling for ASR systems.

FIG. 6 is a schematic view of an example computing device that may be used to implement the systems and methods described herein.

Like reference symbols in the various drawings indicate like elements.

DETAILED DESCRIPTION

Automatic speech recognition (ASR) systems are becoming increasingly popular in client devices as the ASR systems continue to provide more accurate transcriptions of what users speak. Still, in some instances, ASR systems may generate inaccurate transcriptions when they are unable to recognize words/terms that were not, or rarely, seen during training. This may be the case when the user speaks an utterance containing a unique, uncommon, or rare word that was not represented well by the training data used to train the ASR system. For example, a user may speak a proper name, such as "Khe Chai." When the speech recognition model of an ASR system has not been trained to recognize such words, the ASR system may incorrectly transcribe what the user spoke as another word or phrase (e.g., "kitchen") that is acoustically similar to "Khe Chai" and is already known to the ASR system. While spelling is a simple way for users to voice input words that are not recognized by an ASR system (e.g., proper names), conventional ASR systems often do not handle spelling of particular words/phrases reliably and generally require some type of post-processing technique after an entire utterance is transcribed by joining a sequence of characters that provides a correct spelling of the particular word/phrase of interest. However, in some instances, a series of characters intended to spell a word may instead be misrecognized as a sequence of words, preventing post-processing techniques from even recognizing that there is a sequence of characters to join into a word. For example, a letter sequence "Y U N I" may be misrecognized as the sequence of words "why you and I," instead of as spelling a single word "Yuni" as the user intended Furthermore, there are no current solutions to handle the speaking of individual characters to provide the correct spelling of a particular phrase in a seamless manner while performing speech recognition on the user's speech where the user first recites the particular phrase in spoken form and subsequently recites the individual characters that spell the particular phrase. That is, a user may be aware that an ASR system may have difficulty recognizing a particular phrase in an utterance and opt to recite the particular phrase followed by a sequence of characters that spells the particular phrase, e.g., "my name is Khe Chai K H E space C H A I". A conventional ASR model performing speech recognition on the example utterance would ultimately output a transcription of "my name is kitchen Khe Chai" where the particular phrase the user is providing a spelling for is misrecognized (e.g., kitchen) in the transcription followed by the spelling for the particular phrase as a result of joining the sequence of characters. In this scenario, post processing is required where the user may provide a user correction removing the misrecognized phrase (e.g., kitchen) from the transcription or a downstream semantic interpretation is performed to determine that "kitchen" should be removed from the transcription output from the ASR system.

Implementations herein are directed toward enabling a speech recognizer to recognize seamless spelling of a particular phrase in the midst of a spoken utterance, without the user having to explicitly enter a "spelling mode" or make corrections after the speech recognizer transcribes the utterance. This may be particularly handy for uncommon words (e.g., proper names) that the speech recognizer has not been trained to recognize, but are nonetheless conveyed in speech that a user expects the speech recognizer to learn to recognize. For example, a user may speak an utterance that seamlessly spells-out a particular phrase by reciting, in the utterance, a spelling structure that includes the particular phrase (e.g., one or more spoken words such as "Khe Chai") in combination with a sequence of individual characters ("K H E C H A I") that spells the particular phrase. For particular phrases having two or more words, the user may recite two or more spans of consecutive individual characters that each provide a correct spelling for a corresponding one of the two or more particular words and further speak/recite a space command between each adjacent pair of the two or more spans of consecutive individual characters. In the example, the user may recite the space command with the sequence of individual characters as "K H E *space* C H A I" to inform the speech recognizer that the user is spelling two individual words/terms that should be separated by a space in the resulting transcription. In addition to reciting the space command and individual characters, the user may also speak other variants such as a double or triple command for repeated characters. For instance, the user may seamlessly spell-out the particular phrase "toggle" by reciting the particular phrase "toggle" followed by the consecutive individual characters "T O" then "double G" followed by "L E" that spells out the particular phrase. As will become apparent, the speech recognizer is trained to detect the spelling structure in an initial transcription of the utterance so that any initial recognition of the particular phrase is omitted and replaced with the correct spelling of the particular phrase by joining together the sequence of characters. While in many instances the initial recognition of the particular phrase may be misrecognized in the initial transcription, in other instances the speech recognizer may still recognize the particular phrase correctly in the initial transcription yet still detect the spelling structure. In the latter case, the user providing the correct spelling for the particular phrase that was already recognized correctly in the initial transcription may serve to boost the confidence of the speech recognizer in recognizing the particular phrase in subsequent utterances spoken by the user.

In some implementations, the spelling structure recited in the utterance to seamlessly spell-out the particular phrase further includes one or more spell trigger words (e.g., "spell," "as," "as in," "spell ... as," etc.) that more explicitly indicate, or otherwise inform the speech recognizer while performing speech recognition on the utterance, that the sequence of individual characters provides a correct spelling of the particular phrase. For example, a user may speak "Khe Chai *spell* K H E *space* C H A I," "Khe Chai *as* K H E *space* C H A I," "Khe Chai *as in* K H E *space* C H A I," where *spell, as,* or *as in* all correspond to example spell trigger words that indicate that the sequence of characters "K H E *space* C H A I" spells the particular phrase "Khe Chai." Notably, the user also recites the space command, *space,* to indicate the delineation between the adjacent spans of consecutive individual characters. In some examples, when seamlessly spelling the particular phrase, the user speaks one or more initiating trigger words prior to reciting the particular phrase. In the example, the user may speak *"spell* Khe Chai *as in* K H E *space* C H A I such that the user recites an initiating trigger word, *spell,* prior to reciting the particular phrase (Khe Chai) in combination with reciting spell trigger words, *as in,* after reciting the particular phrase but before reciting the sequence of individual characters providing the correct spelling of the particular phrase. The user may speak initiating trigger words as part of the spell structure prior to reciting the particular phrase with or without reciting spell trigger words prior to reciting the sequence of individual characters.

As will become apparent, upon the speech recognizer detecting the spelling structure in an initial transcription of an utterance while performing speech recognition on audio data characterizing the utterance, the speech recognizer may transduce any initiating trigger words, spell trigger words, and space commands recognized in the initial transcription into special tokens that a spelling normalizer omits from a final transcription of the utterance. By the same notion, the spelling normalizer also extracts, from the initial transcription, the sequence of individual characters that provide the correct spelling of the particular phrase, constructs the particular phrase with the correct spelling from the extracted sequence of individual characters, and normalizes the initial transcription to obtain the final transcription for the utterance by replacing any initial recognition of the particular phrase with the corrected phrase constructed from the extracted sequence of individual characters.

A user may seamlessly utter a spelling structure as part of a spoken utterance the user wants recognized. As used herein, a seamless spelling structure or seamlessly speaking a spoken spelling structure may refer to the speaking of a spelling structure within, and as an integral part of, a longer spoken utterance, possibly including other portions for which spelling information is not provided. Therefore, seamless spelling occurs, during, and/or as an integral part of speaking utterances while a speech recognizer is performing speech recognition on the utterance. That is, spelling is not performed or handled post completion of a transcription after the user is finished speaking an utterance.

For example, the user may intuit or anticipate that an ASR model may not be able to recognize one or more words in a spoken utterance and, thus, proactively utter a spelling structure as an integral part of the spoken utterance to provide an accurate spelling for such words. In some examples, the ASR model provides streaming speech recognition results on a display as the user speaks an utterance, and upon viewing that a particular phrase that the user last recited was misrecognized in the displayed speech recognition results, seamlessly recites the spelling structure that includes the sequence of characters and optionally a spell trigger that precedes the recitation of the sequence of characters before continuing to speak the remaining contents of the utterance.

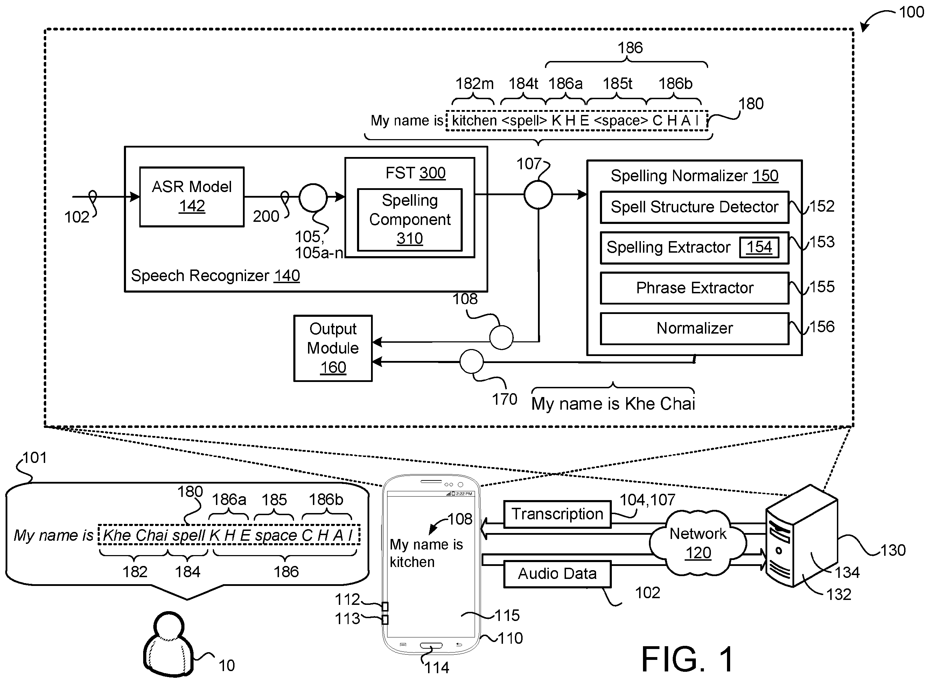

FIG. 1 illustrates an example system 100 for providing seamless spelling while performing speech recognition on audio data 102 captured by a user device 110 that characterizes an utterance (e.g., a query, command, message contents, dictated speech, etc.) 101 spoken by a user 10 of the user device 110. In the example shown, the user 10 seamlessly speaks a spelling structure 180 as part of the utterance 101 to provide a correct spelling for a particular phrase 182 (e.g., one or more particular words) recited in the utterance 101. Here, the spelling structure 180 recited by the user 10 in the utterance 101 includes the particular phrase "Khe Chai" 182; a spell trigger word "spell" 184; and a sequence of individual characters (e.g., "K H E space C H A I") 186 that provides a correct spelling of the particular phrase 182.

The system 100 includes a user device 110. The user device 110 includes data processing hardware 112 and memory hardware 113. The user device 110 may include one or more audio capture devices (e.g., microphone(s) 114) for capturing and converting utterances 101 spoken by the user 10 into the audio data 102 (e.g., digital data or electrical signals). In some examples, the microphone 114 is separate from the user device 110 and in communication with the user device 110 to provide the utterance 101 to the user device 110. The user device 110 can be any computing device capable of communicating with the computing system 130 through the network 120. The user device 110 includes, but is not limited to, desktop computing devices and mobile computing devices, such as laptops, tablets, smart phones, smart keyboards, digital assistants, smart speakers/displays, vehicle infotainment systems, smart appliances, Internet-of-things (IoT) devices, and wearable computing devices (e.g., smart glasses/headsets and/or watches and/or smart headphones).

The system 100 may also include a computing system 130 in communication with the user device 110 via a network 120. The computing system 130 may be a distributed system (e.g., a cloud computing environment) having scalable elastic resources. The resources include computing resources 132 (e.g., data processing hardware) and/or storage resources 134 (e.g., memory hardware). The network 120 can be wired, wireless, or a combination thereof, and may include private networks and/or public networks, such as the Internet.

In some examples, the user device 110 executes (i.e., on the data processing hardware 112) a speech recognizer 140, for processing the audio data 102 to generate an initial transcription 107 and a spelling normalizer 150 to normalize the initial transcription 107 into a final transcription 170 entirely on-device without requiring any connection to the computing system 170. While examples herein depict the speech recognizer 140 and the spelling normalizer 150 executing on the user device 110 (i.e., on the data processing hardware 112), some or all of the functionality of the speech recognizer 140 and/or the spelling normalizer 150 may execute on the computing system 130 (i.e., on the data processing hardware 132) in addition to, or in lieu of, the user device 110 without departing from the scope of the present disclosure. For instance, the computing system 130 may receive the audio data 102 from the user device 110 via the network 120, and execute the speech recognizer 140 to process the audio data 102 and generate the initial transcription 107. The spelling normalizer 150 executing on the computing system 130 (or the user device 110) may normalize the initial transcription 107 into the final transcription 170 and provide the final transcription 170 to an output module 160.

In the example shown, the user 10 speaks a sequence of individual characters 186 that includes two or more spans of consecutive individual characters 186a-n each providing a correct spelling for a corresponding word or portion of the particular phrase 182. For instance, a first span of consecutive individual characters 186a "K H E" provides the correct spelling for a first word "Khe" in the particular phrase 182 while a second span of consecutive individual characters 186b "C H A I" provides the correct spelling for a second word "Chai" in the particular phrase 182. Moreover, the user 10 may also speak a space command 185 "space" between each adjacent pair of the two or more spans of consecutive individual characters 186a, 186b to separate the two corresponding words spelled therefrom by a space in the final transcription 170. In other examples, the user 10 pausing between speaking two adjacent characters in a sequence of characters (e.g., between "E" and "C" in a sequence "K H E C H A I") divides the sequence of characters into the two or more spans of spoken individual characters (e.g., "K H E" and "C H A I") without requiring the user 10 to explicitly recite a space command 185. In some instances, the user 10 neither speaks the space command, nor pauses between two adjacent characters. In such instances, the speech recognizer 140 and spelling normalizer 150 may nevertheless recognize that a sequence of characters spells a particular phrase containing more than one word that should be delineated by a space.

In some implementations, as part of the spelling structure 180, the user 10 also recites one or more spell trigger words 184 after reciting the particular phrase 184 but before reciting the sequence of individual characters 186. As will become apparent, the recitation of a spell trigger word 184 (e.g., "spell") by the user 10 while speaking the utterance 101 serves as a hint to inform the speech recognizer 140 that the following sequence of individual characters 186 the user 10 is to recite corresponds to a correct spelling of the particular phrase 182 recited by the user 10 just before reciting the spell trigger word 184. Additionally or alternatively, the user may recite an initiating trigger word (not shown) in the utterance 101 prior to reciting the particular phrase 182. As with the spell trigger word 184, the initiating trigger word may serve as a hint to inform the speech recognizer 140 that the user 10 is providing a spelling structure 180 for spelling-out the particular phrase 182 that immediately follows the initiating trigger word in the utterance 101 spoken by the user 10.

The speech recognizer 140 processes the audio data 102 characterizing the utterance 101 captured by the user device 110. The speech recognizer 140 includes an ASR model 142 that performs speech recognition on the audio data 102 to generate a word lattice 200 indicating multiple candidate hypotheses 105, 105a-n for the utterance 101. The word lattice 200 may also be referred to as a decoding graph. Accordingly, the ASR model 142 may evaluate potential paths through the word lattice 200 to determine the multiple candidate hypotheses 105.

The ASR model 142 may include an end-to-end neural network model that converts audio data directly into corresponding text, without requiring the use of separately trained acoustic, pronunciation, and language models. In some examples, the ASR model 142 includes a streaming speech recognition model capable of emitting streaming transcription results as the user speaks. In these examples, the ASR model 142 may continuously emit initial transcriptions 107 as the audio data 102 is processed in a streaming fashion and display the most current initial transcription 107 for display on a screen (e.g., graphical user interface) 115 in communication with the user device 110. An example streaming speech recognition model 142 may include a recurrent neural network-transducer (RNN-T) architecture.

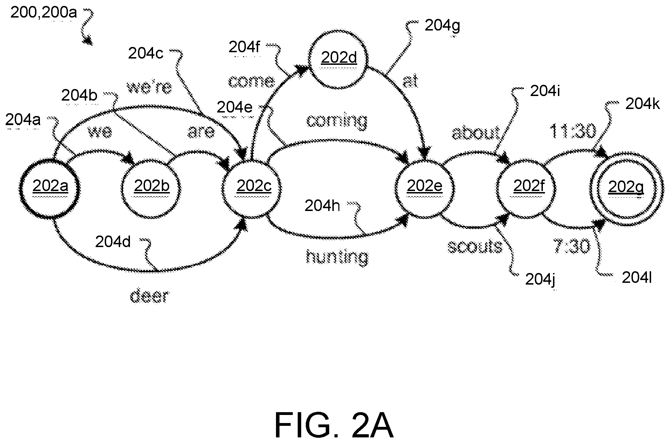

FIG. 2A illustrates an example of a word lattice 200, 200a that may be output from the ASR model 142 of FIG. 1. The word lattice 200a represents multiple possible combinations of words that may form different candidate hypotheses 105 (FIG. 1) for a spoken utterance 101. The word lattice 200a includes one or more nodes 202a-g that correspond to the possible boundaries between words. The word lattice 200a includes multiple edges 204a-l for the possible words in the candidate hypotheses that result from the word lattice 200a. In addition, each of the edges 204a-l can have one or more weights or probabilities of that edge being the correct edge from the corresponding node. The weights are determined by the ASR model 142 and can be based on, for example, a confidence in the match between the speech data and the word for that edge and how well the word fits grammatically and/or lexically with other words in the word lattice 200a.

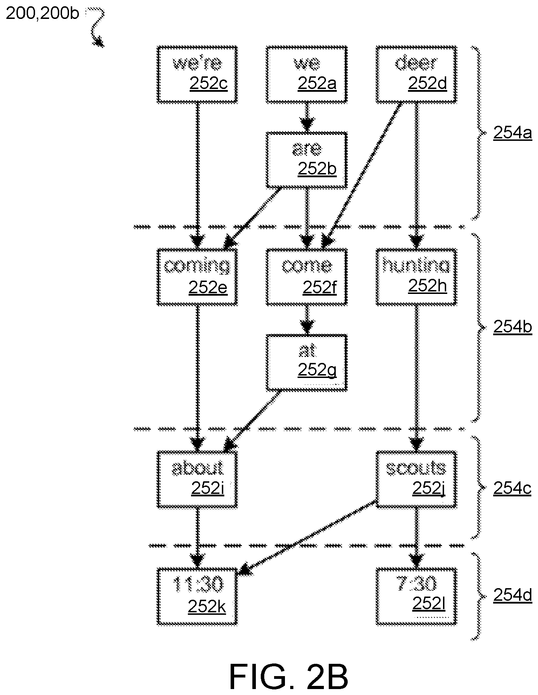

While the word lattice 200a and a word lattice 200b shown in FIG. 2B are described with reference to words as nodes, this is for illustration purposes only. Alternatively, a lattice may include a graph of sub-word units where nodes of the lattice represent sub-word units output by the ASR model 142 that are used to form words based on the weights or probabilities of the edges connecting the nodes. Moreover, a lattice may include a graph of words and sub-word units, or any other parts of speech. Subwords in the word lattice 200 may include any combination of words, wordpieces, and individual characters/graphemes.

For example, initially, the most probable path (e.g., most probable candidate hypothesis 200) through the word lattice 200a may include the edges 204c, 204e, 204i, 204k, which have the text "we're coming about 11:30." A second best path (e.g., second best candidate hypothesis 200) through the word lattice 200a may include the edges 204d, 204h, 204j, 204l, which have the text "deer hunting scouts 7:30."

Each pair of nodes may have one or more paths corresponding to the alternate words in the various candidate hypotheses 200. For example, the initial most probable path between the node pair beginning at node 202a and ending at the node 202c is the edge 204c "we're." This path has alternate paths that include the edges 204a, 204b "we are" and the edge 204d "deer."

FIG. 2B is an example of a hierarchical word lattice 200, 200b that may be provided by the ASR model 142 of FIG. 1. The word lattice 200b includes nodes 252a-l that represent words that make up the various candidate hypotheses 200 for a spoken utterance 101. The edges between the nodes 252a-l show that the possible candidate hypotheses 200 include: (1) the nodes 252c, 252e, 252i, 252k "we're coming about 11:30"; (2) the nodes 252a, 252b, 252e, 252i, 252k "we are coming about 11:30"; (3) the nodes 252a, 252b, 252f, 252g, 252i, 252k "we are come at about 11:30"; (4) the nodes 252d, 252f, 252g, 252i, 252k "deer come at about 11:30"; (5) the nodes 252d, 252h, 252j, 252k "deer hunting scouts 11:30"; and (6) the nodes 252d, 252h, 252j, 252l "deer hunting scouts 7:30."

Again, the edges between the nodes 252a-l may have associated weights or probabilities based on the confidence in the speech recognition (e.g., candidate hypothesis) and the grammatical/lexical analysis of the resulting text. In this example, "we're coming about 11:30" may currently be the best hypothesis and "deer hunting scouts 7:30" may be the next best hypothesis. One or more divisions, 354a-d, can be made in the word lattice 200b that group a word and its alternates together. For example, the division 254a includes the word "we're" and the alternates "we are" and "deer." The division 252b includes the word "coming" and the alternates "come at" and "hunting." The division 254c includes the word "about" and the alternate "scouts" and the division 254d includes the word "11:30" and the alternate "7:30."

Referring back to FIG. 1, the speech recognizer 140 determines an initial transcription 107 as a highest-ranking candidate hypothesis 105 among the multiple candidate hypotheses in the word lattice 200. Notably, the initial transcription 107 includes a misrecognition of the particular phrase 182 by the ASR model 142 where transcription 107 includes the misrecognized phrase 182m "kitchen" instead of the correct particular phrase 182 "Khe Chai". Following the misrecognized phrase 182m, the initial transcription 107 also includes the sequence of individual characters 186 that provide the correct spelling of the particular phrase 182. Implementations herein are directed toward the speech recognizer 140 detecting/recognizing, from the lattice 200, the spelling structure 180 spoken by the user 10 to indicate that the user 10 is speaking the sequence of individual characters 186 to represent a correct spelling for the preceding particular phrase 182. In some implementations, the speech recognizer 140 includes a finite state transducer (FST) 300 (e.g., a weighted FST) downstream of the ASR model 142 for evaluating the potential paths through the word lattice 200 that form the different candidate hypotheses 105 for the spoken utterance 101. The FST 300 may determine confidence scores for each of the candidate hypotheses and identify the initial transcription 107 as a highest ranking one of the candidate hypotheses 105 output by the ASR model 142 at a corresponding output step. The FST 300 may, for example, execute a beam search on the word lattice 200 to identify and score candidate hypotheses 105 for the audio data 102, and select or determine an initial transcription 107 of the spoken utterance 101 to be the candidate hypotheses 105 having the highest likelihood score 106.

In some examples, the FST 300 includes a spelling component 310 configured to detect the presence of the spelling structure 180 in the initial transcription 107 by identifying the one or more spell trigger words 184 in the initial transcription 107 subsequent to the misrecognition of the particular phrase 182m. Specifically, the weighted FST 300 may transduce recognition of a trigger word 184 in the initial transcription 107 into a corresponding trigger word token 184t that the spelling normalizer 150 will remove from inclusion in the resulting final transcription 170. That is, detecting the spelling structure 180 in the initial transcription 108 by the spelling component 310 may cause the weighted FST 300 to suppress selection of any spell trigger words 184 as well as any initiating triggers words detected by the spelling component 310 in the lattice 200 by setting their outputs to epsilon and including any trigger word tokens 184t (e.g., "<spell>") in the initial transcription 107. Other spell tokens may be used. The trigger word token 184t may be used regardless of what type of trigger words (e.g., spell trigger word or initiating trigger word) are detected. The trigger word token 184t may be included when a detected spelling structure contains one or more spell trigger words (e.g., "spell," "as in," "spell ... as," "spell ... as in," etc.). When recited by the user 10, the initiating trigger word and the spell trigger word form a predefined spell command operative to inform the spelling component 310 the user 10 is reciting a sequence of individual characters to provide a correct spelling for a particular phrase that precedes the sequence of individual characters.

In some examples, the spelling component 310 of the weighted FST 300 detects a spelling structure in the initial transcription 107 that does not include trigger word tokens 184t indicative of the user 10 never reciting the initiating trigger word or the spell trigger word in the utterance 101. For example, the spelling component 310 may detect/recognize the sequence of individual characters spoken by the user in the utterance, and then use acoustic modeling and/or language modeling techniques to determine that the sequence of individual characters provides a correct spelling for a particular phrase (whether misrecognized or recognized correctly) that precedes the sequence of individual characters in the transcription 107.

The speech recognizer 140 may also identify pauses in a spoken sequence of individual characters and/or utterances of a space command 185, such as "space," within the sequence of individual characters. Detecting the space command 185 in the initial transcription 107 causes the weighted FST 300 to output a corresponding space command token 185t in the initial transcription 107 in order to suppress selection of the space command 185 detected by the spelling component 310 in the lattice 200 by setting its output to epsilon. For example, the weighted FST 300 may include, in the initial transcription 107, the space token 185t, such as "<space>."

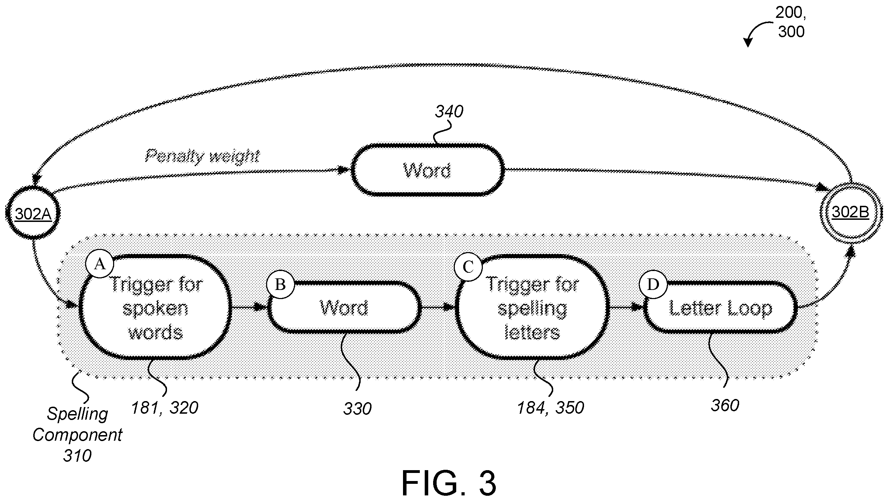

FIG. 3 is a schematic view of an example spelling component 310 of the weighted FST 300 configured to detect a presence of a spelling structure 180 spoken as an integral part of an utterance 101 spoken by the user 10. The spelling component 310 represents the detection of various possible spelling structures containing a particular phrase, a sequence of individual characters, optional spell trigger words 184, optional initiating trigger words 181, and/or optional space commands 185. In the example shown, the weighted FST 300 is modified to include the spelling component 310 between a pair of nodes 302A and 302B of the word lattice 200 output by the ASR model 142. For example, included between a pair of possible boundaries between possible transcribed words or subwords for the spoken utterance (e.g., between nodes 202A and 202B of FIG. 2A or nodes 252a and 252b of FIG. 2B). The spelling structure 310 is configured to detect the presence of a spelling structure 180 in the lattice 200 providing multiple candidate hypotheses 105 (FIG. 1) for the utterance 101 spoken by the user 10.

FIG. 3 shows operations (A) to (D) that illustrate a flow of data. During operation (A), the spelling component 310 executes an initiating trigger word decoding graph 320 for determining whether a corresponding subword 340 in the lattice 200 includes an initiating trigger word 181 (e.g., "spell") that a user 10 may speak to indicate a start of the spelling structure 180 within the utterance before speaking the particular phrase 182 the user wants to seamless spell. That is, the initiating trigger word 181 is spoken immediately before speaking the particular phrase 182 followed by the sequence of individual characters 184 that provide the correct spelling for the particular phrase 182. Continuing with the example, the initiating trigger word decoding graph 320 may detect the initiating trigger word 181 "spell" in an utterance of *"spell* Khe Chai *as* K H E C H A I." In some examples, the FST 300 sets likelihood scores of triggers detected by the decoding graph 320 to epsilon in other portions of the FST 300 such that they do not appear in the initial transcription 107, but are replaced with a trigger word token 184t in the initial transcription 107, as described above.

During operation (B), the spelling component 310 next executes a spoken word decoding graph 330 for determining whether a next corresponding subword 340 in the lattice as the particular phrase 182. In some examples, the decoding 330 detects words by detecting a prefix token (e.g., "_A," "_B," "_a," "_b," etc., where "_" signifies a space before a character) followed by one or more non-prefix tokens (e.g., "A," "B," "a," "b," etc.). In some examples, the FST 300 applies a small penalty weight to scoring of words 340 detected by the decoding graph 330 in other portions of the FST 300 to slightly increase a likelihood score for the spelling component 310 over other possible paths in the lattice 200. While FIG. 3 depicts the spoken word decoding graph 330 of operation (B) occurring after performing the initiating trigger word decoding graph 320 of operation (A), the spoken word decoding graph 330 may detect the word 340 corresponding to the particular phrase 182 as the start of a spelling structure regardless of whether the initiating trigger word decoding graph 320 performed by operation (F) detected a preceding initiating trigger word. Continuing with the example, the spoken word decoding graph 330 detects the misrecognized phrase 182m "kitchen" representing a misrecognition of the particular phrase 182 "Khe Chai" by the ASR model 182.

During operation (C), the spelling component 310 executes a spell trigger decoding graph 350 for determining whether a next corresponding subword 340 in the lattice 200 includes a spell trigger word 184 that the user may speak after speaking the particular phrase 182 but prior to speaking the sequence of individual characters 186 that provides the correct spelling for the particular phrase 182. For example, the spell trigger decoding graph 350 may determine that the corresponding word 340 "spell" in an utterance of "Khe Chai *spell* K H E C H A I," or the word "as" in an utterance of *"spell* Khe Chai *as* K H E C H AI" as spell trigger words 184. As shown, spell trigger words detected by the decoding graph 350 may be a continuance of initiating spell trigger words detected by the decoding graph 320.

During operation (D), the spelling structure 310 executes an individual character decoding graph 360 for determining whether a next corresponding subword 340 in the lattice 200 is part of the sequence of individual characters 186 (e.g., "_A," "_B," "_a," "_b," etc., where "_" signifies a space before a character) in the spelling structure 180 that provide the correct spelling for the particular phrase 182. The individual character decoding graph 360 may continuously loop upon determining each individual character in the sequence of individual characters 186. Accordingly, the decoding graphs 320, 330, 350, 360 performed by operations (A) to (D) may detect the presence of the spelling structure 180 in the initial transcription 107.

Returning to FIG. 1, in response to detecting the spelling structure 180 in the initial transcription 107, the spelling normalizer 150 is configured to normalize the initial transcription 107 to obtain the final transcription 170 for the utterance 101 by replacing the misrecognition of the particular phrase 182m with a corrected phrase constructed by joining the sequence of individual characters 186 spoken by the user 10 seamlessly in the utterance 101. Continuing with the example, the spelling normalizer 150 replaces the misrecognized phrase 182m in the initial transcription 107 (e.g., "kitchen") with a spelled or corrected phrase (e.g., "Khe Chai) constructed from the sequence of individual characters 186.

The spelling normalizer 150 may execute a spell structure detector 152 to detect the spelling structure 180 in the initial transcription 107. For instance, the spell structure detector 152 may detect any of the trigger word tokens 184t (e.g., "<spell>") in addition to the individual sequence of individual characters 186. In response to detecting the spelling structure 180 in the initial transcription 107, the spelling normalizer 150 proceeds to execute a spelling extractor 153 to construct, or otherwise form, a corrected phrase (e.g., "Khe Chai") from the sequence of individual characters 186. In particular, the spelling extractor 153 first extracts a longest sequence of individual characters 186, blank spaces, and space token 185 subsequent to the trigger word token 184t in the initial transcription 107 (e.g., "K H E <space> C H A I").

The spelling extractor 153 then constructs the corrected phrase from the extracted sequence of individual characters 186 by joining the individual characters for each span 186a, 186b to form a corresponding one of two or more particular words (e.g., Khe and Chai) and replacing each space token (e.g., <space>) 185 in the initial transcription with a blank space. The spelling extractor 153 may also remove spaces (white/blank spaces) between the characters when joining the individual characters together to form the corrected phrase. The spelling extractor 153 may additionally normalize the spelled words by executing a capitalization module 154. The capitalization module 154 may capitalize each spelled word, as may be suitable for proper names (e.g., forming a spelled or corrected phrase of "Khe Chai").

The spelling normalizer 150 also executes a phrase extractor 155 to identify and extract the misrecognized particular phrase 182m from the initial transcription 107. Notably, the particular phrase 182 may be recognized correctly, however the spelling normalizer needs to replace the particular phrase with the correct phrase constructed from the sequence of individual characters to avoid repeating the particular phrase in the final transcription 170. The phrase extractor 155 determines the misrecognized phrase to be a span of words preceding the spell token that best matches the corrected particular phrase (e.g., "Khe Chai"). As described above, the decoding graph 330 of the spelling component 310 (see FIG. 3) may identify or detect the span of words. In some example, the number of words identified by the spelling component 310 may be different from the number of words in the corrected particular phrase. For example, "Khe Chai" may be misrecognized as "kitchen." Continuing with the example, the phrase extractor 155 identifies "kitchen" as the misrecognized particular phrase 182m in the initial transcription 107.

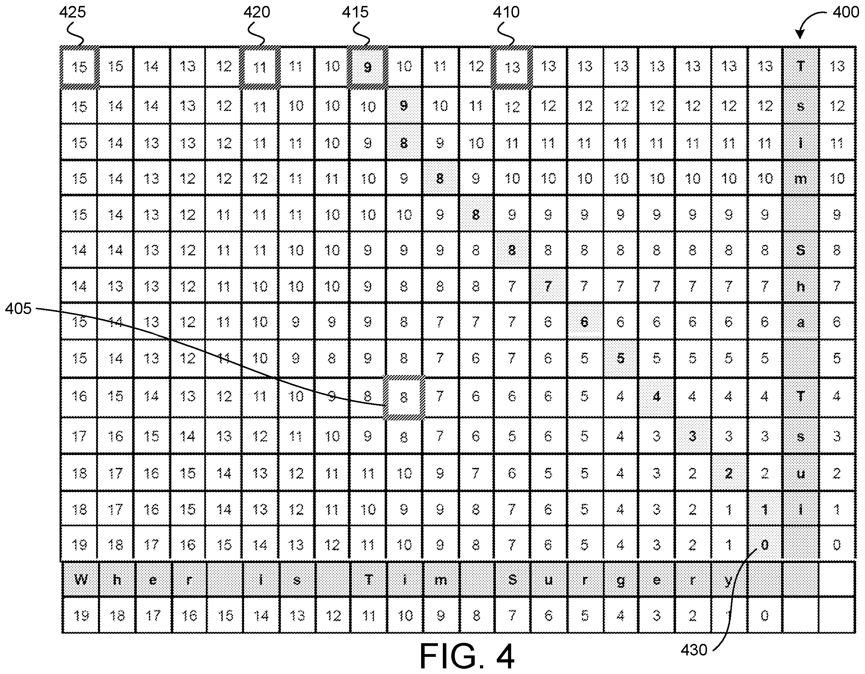

In some examples, the phrase extractor 155 uses Levenshtein distance to measure the distance (e.g., minimum edits) between two strings. In particular, the phrase extractor 156 may use Levenshtein distances to compare the spelled words of the corrected phrase with multiple spans of words of different lengths that precede the spell token in the initial transcription 107, and choose the span of words with the smallest Levenshtein distance as the misrecognized particular phrase. In the example shown, the phrase extractor 155 computes Levenshtein distances between the corrected phrase "Khe Chai" and the word spans "kitchen," "is kitchen," "name is kitchen," and "My name is kitchen." In some examples, the phrase extractor 155 computes Levenshtein distances using dynamic programming by progressively computing the Levenshtein distances of sub-strings (e.g., "kitchen" is a sub-string of "name is kitchen"). That is, the phrase extractor 155 may compute Levenshtein distances of multiple word spans by performing only one set of Levenshtein distance calculations based on the longest span (e.g., "My name is kitchen"), as shown in FIG. 4.

FIG. 4 is a table 400 representing example Levenshtein distances between sub-strings. In particular, each cell of the table 400 represents a Levenshtein distance between two particular sub-strings. The example of FIG. 4 represents Levenshtein distances between sub-strings of a spelled corrected phrase "Tsim Sha Tsui," and sub-strings of candidate misrecognized phrases: "surgery," "Tim surgery," "is Tim surgery," and "Where is Tim surgery." An example entry in cell 405 indicates that the Levenshtein distance between "im Surgery" and "Tsui" is 8. Cells 410, 415, 420, and 425 contain example Levenshtein distances between the spelled corrected phrase "Tsim Sha Tsui" and respective ones of the four candidate sub-strings: "surgery," "Tim surgery," "is Tim surgery," and "Where is Tim surgery." In this example, the sub-string "Tim Surgery" corresponding to cell 415 is identified as misrecognized phrase because it has the smallest Levenshtein distance from the spelled phrase "Tsim Sha Tsui."

The table 400 has $(R + 1) \times (C + 1)$ entries, where R is the number of characters (including spaces) in the spelled phrase, and C is the number of characters (including spaces) in the longest candidate phrase. Row indices shown in the right-most column, and column indices shown in the bottom-most row are specified with respect to the origin at the bottom right. The $(r, c)^{th}$ entry at row r and column c can be computed recursively using the following mathematical expression:

$$d_{r,c} = min \left\{ d_{r-1,c} + C_{del}, \ d_{r,c-1} + C_{ins}, \ d_{r-1,c-1} + C_{sub} \right\}$$

where $C_{del}$, $C_{ins}$, and $C_{sub}$ are the costs for deletion, insertion, and substitution, respectively. The phrase extractor 155 can compute the table 400 starting from the bottom right cell 430 where $d_{0,0} = 0$, $d_{0,c} = c$, and $d_{r,0} = r$.

Referring back to FIG. 1, the spelling normalizer executes a normalizer 156 for replacing the misrecognized particular phrase (e.g., "kitchen") identified by the phrase extractor 155 with the spelled corrected phrase (e.g., "Khe Chai") to provide the final transcription 104 "My name is Khe Chai".

An output module 160 may output the final transcription 104 for display on the screen 115 of the user device 110. The output module 160 may also receive initial transcriptions 107 output by the speech recognizer and display the initial transcriptions as partial speech recognition results on the screen 115 in a streaming fashion. The output module 160 may also include a downstream application (e.g., digital assistant) that performs semantic interpretation (e.g., natural language understanding (NLU)) on the transcription 104 to identify a command/query for the application to perform. The output module 160 may include a search engine. The output module 160 may include an input method editor (IME). The output module 160 may include a messaging application for communicating the transcription 104 as contents of a message to another user. The output module 160 ma further include a model updater for personalizing the ASR model 142 to improve recognition of the particular phrase in a subsequent utterance. The output module 160 may include a natural language processing (NLP) module for interpreting the transcription 170. Other types of output modules 160 may also be implemented.

In some examples, the audio data 102 is received as streaming data as the user 10 speaks an utterance (e.g., "My name is Khe Chai, and I am glad to meet you"), and the speech recognizer 140 performs streaming speech recognition on the streaming audio data 102 as the audio data 102 is received to provide streaming speech recognition results. For example, as the user 10 speaks the utterance, the speech recognizer 140 may determine partial initial transcriptions 108 that reflect what the user 10 has already spoken. For instance, as and after the user 10 speaks "My name is Khe Chai," but before they speak the rest of the utterance 101 (e.g., "and I am glad to meet you"), the output module 160 may output a partial initial transcription 108 of "My name is kitchen" on the screen 115. The user 10 may, in response to seeing or recognizing the misrecognition of the particular phrase "Khe Chai" as "kitchen" in the displayed partial initial transcription 108, seamlessly speak a spoken spelling structure as a seamless or integral part of the rest of their utterance. For example, the user 10 may continue by speaking a spelling structure "spell K H E space C H A I," thus, providing a correct spelling for the misrecognized particular phrase "Khe Chai," and then continue with speaking the rest of their utterance "and I am glad to meet you." In this way, the user 10 can temporally and seamlessly change to spelling in the midst of ongoing ASR, and then seamlessly return to speaking the rest of their utterance.

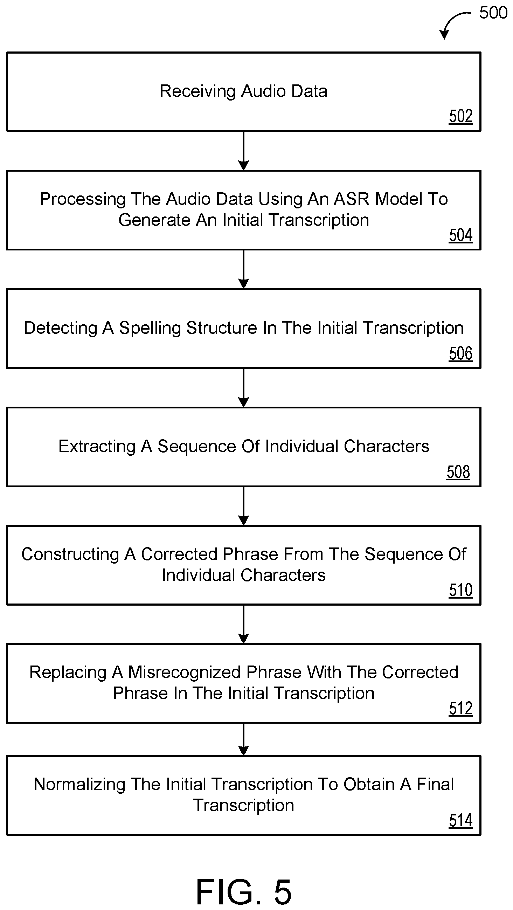

FIG. 5 is a flowchart of an exemplary arrangement of operations for a method 500 that may be performed by data processing hardware for providing seamless spelling for ASR systems. Data processing hardware (e.g., the data processing hardware 112 of the user device 110 and/or the data processing hardware 132 of the computing system 130 of FIG. 1) may execute the operations for the method 500 by executing instructions stored on memory hardware (e.g., the memory hardware 113, 134).

At operation 502, the method 500 includes receiving audio data 102 corresponding to an utterance 101 spoken by a user 10. The utterance 101 including a particular phrase (e.g., the phrase 103a of FIG. 1) and a sequence of characters that provide a correct spelling of the particular phrase (e.g., the characters 103c) spoken after the particular phrase.

At operation 504, the method 500 includes processing the audio data 102, using an ASR model 142, to generate an initial transcription (e.g., the initial transcription 107). The initial transcription containing a misrecognition of the particular phrase by the ASR model (e.g., "kitchen") followed by the sequence of individual characters that provide a correct spelling of the particular phrase.

At operation 506, the method 500 includes detecting a spelling structure in the initial transcription (e.g., the spelling structure 103) subsequent to the misrecognition of the particular phrase. At operation 508, and in response to detecting the spelling structure in the initial transcription, the method 500 includes extracting, from the initial transcription, the sequence of individual characters that provide the correct spelling of the particular phrase (e.g., the sequence of individual characters 107g).

At operation 510, the method 500 includes constructing a corrected phrase for the misrecognized particular phrase from the extracted sequence of individual characters (e.g., "Khe Chai"). The method 500 continues at operation 512 to replace the misrecognized phrase with the corrected phrase in the initial transcription, and at operation 514 to normalize the initial transcription to obtain a final transcription (e.g., the final transcription 104).

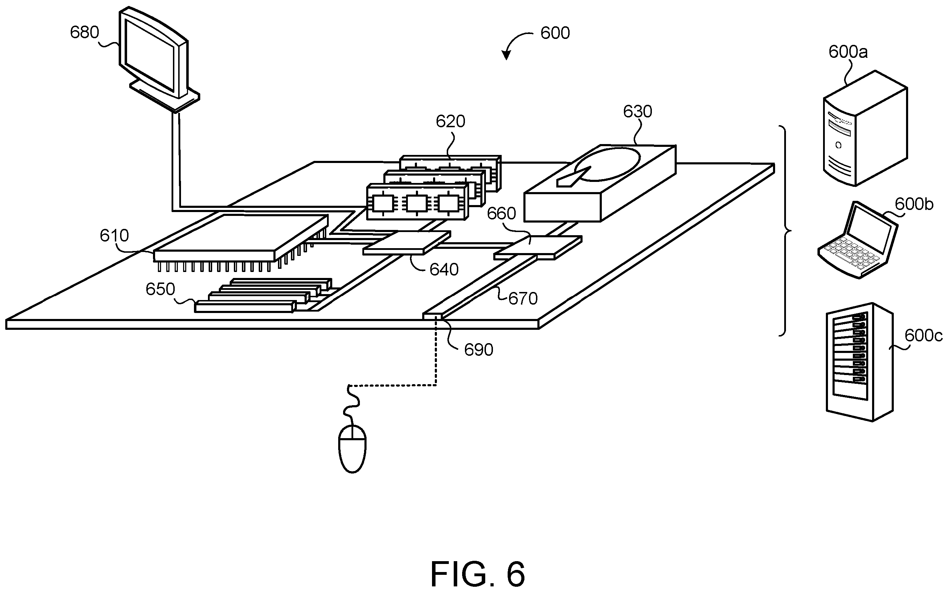

FIG. 6 is a schematic view of an example computing device 600 that may be used to implement the systems and methods described in this document. For example, the computing device 600 may be used to implement the user device 110 and/or the computing system 130. The computing device 600 is intended to represent various forms of digital computers, such as laptops, desktops, workstations, personal digital assistants, servers, blade servers, mainframes, and other appropriate computers. The components shown here, their connections and relationships, and their functions, are meant to be exemplary only, and are not meant to limit implementations of the inventions described and/or claimed in this document.

The computing device 600 includes a processor 610 that may be used to implement the data processing hardware 112 and/or 132, memory 620 that may be used to implement the memory hardware 113 and/or 134, a storage device 630 that may be used to implement the memory hardware 113 and/or 134, a high-speed interface/controller 640 connecting to the memory 620 and high-speed expansion ports 650, and a low speed interface/controller 660 connecting to a low speed bus 670 and a storage device 630. Each of the components 610, 620, 630, 640, 650, and 660, are interconnected using various busses, and may be mounted on a common motherboard or in other manners as appropriate. The processor 610 can process instructions for execution within the computing device 600, including instructions stored in the memory 620 or on the storage device 630 to display graphical information for a graphical user interface (GUI) on an external input/output device, such as display 680 coupled to high speed interface 640. In other implementations, multiple processors and/or multiple buses may be used, as appropriate, along with multiple memories and types of memory. Also, multiple computing devices 600 may be connected, with each device providing portions of the necessary operations (e.g., as a server bank, a group of blade servers, or a multiprocessor system).

The memory 620 stores information non-transitorily within the computing device 600. The memory 620 may be a computer-readable medium, a volatile memory unit(s), or non-volatile memory unit(s). The non-transitory memory 620 may be physical devices used to store programs (e.g., sequences of instructions) or data (e.g., program state information) on a temporary or permanent basis for use by the computing device 600. Examples of non-volatile memory include, but are not limited to, flash memory and read-only memory (ROM) / programmable read-only memory (PROM) / erasable programmable read-only memory (EPROM) / electronically erasable programmable read-only memory (EEPROM) (e.g., typically used for firmware, such as boot programs). Examples of volatile memory include, but are not limited to, random access memory (RAM), dynamic random access memory (DRAM), static random access memory (SRAM), phase change memory (PCM) as well as disks or tapes.

The storage device 630 is capable of providing mass storage for the computing device 600. In some implementations, the storage device 630 is a computer-readable medium. In various different implementations, the storage device 630 may be a floppy disk device, a hard disk device, an optical disk device, or a tape device, a flash memory or other similar solid state memory device, or an array of devices, including devices in a storage area network or other configurations. In additional implementations, a computer program product is tangibly embodied in an information carrier. The computer program product contains instructions that, when executed, perform one or more methods, such as those described above. The information carrier is a computer- or machine-readable medium, such as the memory 620, the storage device 630, or memory on processor 610.

The high speed controller 640 manages bandwidth-intensive operations for the computing device 600, while the low speed controller 660 manages lower bandwidth-intensive operations. Such allocation of duties is exemplary only. In some implementations, the high-speed controller 640 is coupled to the memory 620, the display 680 (e.g., through a graphics processor or accelerator), and to the high-speed expansion ports 650, which may accept various expansion cards (not shown). In some implementations, the low-speed controller 660 is coupled to the storage device 630 and a low-speed expansion port 690. The low-speed expansion port 690, which may include various communication ports (e.g., USB, Bluetooth, Ethernet, wireless Ethernet), may be coupled to one or more input/output devices, such as a keyboard, a pointing device, a scanner, or a networking device such as a switch or router, e.g., through a network adapter.

The computing device 600 may be implemented in a number of different forms, as shown in the figure. For example, it may be implemented as a standard server 600a or multiple times in a group of such servers 600a, as a laptop computer 600b, or as part of a rack server system 600c.

Various implementations of the systems and techniques described herein can be realized in digital electronic and/or optical circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications, or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, non-transitory computer readable medium, apparatus, and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

The processes and logic flows described in this specification can be performed by one or more programmable processors, also referred to as data processing hardware, executing one or more computer programs to perform functions by operating on input data and generating output. The processes and logic flows can also be performed by special purpose logic circuitry, e.g., an FPGA (field programmable gate array) or an ASIC (application specific integrated circuit). Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, one or more aspects of the disclosure can be implemented on a computer having a display device, e.g., a CRT (cathode ray tube), LCD (liquid crystal display) monitor, or touch screen for displaying information to the user and optionally a keyboard and a pointing device, e.g., a mouse or a trackball, by which the user can provide input to the computer. Other kinds of devices can be used to provide interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

A number of implementations have been described. Nevertheless, it will be understood that various modifications may be made.

**Claims**

1. A computer-implemented method (500) that, when executed on data processing hardware (610), causes the data processing hardware (610) to perform operations comprising:

   receiving audio data (102) characterizing an utterance (101) spoken by a user, the utterance (101) comprising a particular phrase (182) and a sequence of individual characters (186) that provide a correct spelling of the particular phrase (182) spoken after the particular phrase (182);
   processing, using an automatic speech recognition (ASR) model, the audio data (102) to generate an initial transcription (107) for the utterance (101), the initial transcription (107) comprising a misrecognition of the particular phrase (182) by the ASR model (142) followed by the sequence of individual characters (186) that provide the correct spelling of the particular phrase (182);
   detecting a spelling structure (103) in the initial transcription (107) subsequent to the misrecognition of the particular phrase (182), wherein detecting the spelling structure (103) comprises executing a weighted finite state transducer (wFST) having a spelling component (310) configured to detect the spelling structure (103) in the initial transcription (107) by identifying one or more spell trigger words (184) in the initial transcription (107) subsequent to the misrecognition of the particular phrase (182); and
   in response to detecting the spelling structure (103) in the initial transcription (107):

      extracting, from the initial transcription (107), the sequence of individual characters (186) that provide the correct spelling of the particular phrase (182);
      constructing a corrected phrase for the misrecognition of the particular phrase (182) from the extracted sequence of individual characters (186);

extracting, from the initial transcription (107), the misrecognition of the particular phrase (182); and

normalizing the initial transcription (107) to obtain a final transcription (104) for the utterance (101) by replacing the extracted misrecognition of the particular phrase (182) with the corrected phrase constructed from the extracted sequence of individual characters (186).

2. The method (500) of claim 1, wherein:

receiving the audio data (102) comprises receiving the audio data (102) as the user speaks the utterance (101);

performing speech recognition on the audio data (102) comprises performing streaming speech recognition on the audio data (102) as the audio data (102) is received to generate, as output from the ASR model (142), streaming speech recognition results; and

the operations further comprise providing each streaming speech recognition result generated as output from the ASR model (142) for display on a screen (115) in communication with the data processing hardware (610).

3. The method (500) of claims 1 or 2, wherein the operations further comprise displaying a partial speech recognition result including the misrecognition of the particular phrase (182) on the screen (115) before the user speaks the sequence of individual characters (186) comprising the spelling of the particular phrase (182).

4. The method (500) of any preceding claim, wherein detecting the spelling structure (103) comprises executing a weighted finite state transducer (wFST) having a spelling component (310) configured to detect the spelling structure (103) in the initial transcription (107) by identifying one or more initiating trigger words in the initial transcription (107) preceding the misrecognition of the particular phrase (182).

5. The method (500) of claim 4, wherein the one or more initiating trigger words and the one or more spell trigger words (184) form a predefined spell command.

6. The method (500) of claim 4 or 5, wherein detecting the spelling structure (103) in the initial transcription (107) is further based on identifying the sequence of individual characters (186) in the initial transcription (107) subsequent to identifying the one or more spell trigger words (184).

7. The method (500) of any of claims 1-6, wherein the operations further comprise, after constructing the corrected phrase from the extracted sequence of individual characters (186), applying a capitalization normalizer (156) to capitalize a first letter of at least one word in the corrected phrase.

8. The method (500) of any of claims 1-7, wherein:

the particular phrase (182) spoken by the user in the utterance (101) comprises two or more particular words;

the sequence of individual characters (186) that provide the correct spelling of the particular phrase (182) comprise two or more spans of consecutive individual characters (186) that each provide a correct spelling for a corresponding one of the two or more particular words; and

the utterance (101) spoken by the user further comprises the user speaking a space command (185) between each adjacent pair of the two or more spans of consecutive individual characters (186).

9. The method (500) of claim 8, wherein:

the initial transcription (107) further comprises a space token (185t) inserted between each adjacent pair of the two or more spans of consecutive individual characters (186) of the sequence of individual characters (186); and

constructing the corrected phrase from the extracted sequence of individual characters (186) comprises:

for each span of consecutive individual characters (186), joining the individual characters (186) to form the corresponding one of the two or more particular words; and

replacing each space token (185t) in the initial transcription (107) with a blank space.

10. The method (500) of any of claims 1-9, wherein the misrecognition of the particular phrase (182) comprises one or more words.

11. The method (500) of any of claims 1-10, wherein extracting the misrecognition of the particular phrase (182) is based on an edit distance between the sequence of individual characters (186) in the initial transcription (107) and the misrecognition of the particular phrase (182).

12. The method (500) of any of claims 1-11, wherein extracting the misrecognition of the particular phrase (182) comprises:

determining a corresponding edit distance between the sequence of individual characters (186) and each word span of multiple word spans of different lengths in the initial transcription (107), the multiple word spans preceding the sequence of individual characters (186); and

identifying the word span of the multiple word spans of different lengths that has a shortest corresponding edit distance to the misrecognition of the particular phrase (182).

13. The method (500) of claim 12, wherein the corresponding edit distance comprises a corresponding Levenshtein distance dynamically computed for each of the multiple word spans via a single calculation.

14. The method (500) of any of claims 1-13, wherein detecting the spelling structure (103) in the initial transcription (107) and normalizing the initial transcription (107) to obtain the final transcription (104) occurs without receiving any user input after the user finishes speaking the utterance (101).

15. A system (100) comprising:

data processing hardware (610); and
memory hardware (620) in communication with the data processing hardware (610) and storing instructions that, when executed on the data processing hardware (610), cause the data processing hardware (610) to perform the method of any preceding claim.

**Patentansprüche**

1. Computerimplementiertes Verfahren (500), das, wenn es auf Datenverarbeitungshardware (610) ausgeführt wird, die Datenverarbeitungshardware (610) veranlasst, Vorgänge durchzuführen, die Folgendes umfassen:

Empfangen von Audiodaten (102), die eine durch einen Benutzer ausgesprochene Äußerung (101) kennzeichnen, wobei die Äußerung (101) eine bestimmte Phrase (182) und eine Sequenz einzelner Zeichen (186) umfasst, die ein korrektes Buchstabieren der bestimmten Phrase (182) bereitstellen, das nach der bestimmten Phrase (182) ausgesprochen wird;
Verarbeiten der Audiodaten (102) unter Verwendung eines automatischen Spracherkennungsmodells (automatic speech recognition, ASR), um eine initiale Transkription (107) für die Äußerung (101) zu erzeugen, wobei die initiale Transkription (107) eine Fehlerkennung der bestimmten Phrase (182) durch das ASR-Modell (142) umfasst, gefolgt von der Sequenz einzelner Zeichen (186), die das korrekte Buchstabieren der bestimmten Phrase (182) bereitstellen;
Detektieren einer Buchstabierungsstruktur (103) in der initialen Transkription (107) nach der Fehlerkennung der bestimmten Phrase (182), wobei das Detektieren der Buchstabierungsstruktur (103) Ausführen eines gewichteten endlichen Zustandswandlers (weighted finite state transducer, wFST) umfasst, der eine Buchstabierungskomponente (310) aufweist, die konfiguriert ist, um die Buchstabierungsstruktur (103) in der initialen Transkription (107) durch Identifizieren eines oder mehrerer Buchstabierungsauslösewörter (184) in der initialen Transkription (107) nach der Fehlerkennung der bestimmten Phrase (182) zu detektieren; und
als Reaktion auf das Detektieren der Buchstabierungsstruktur (103) in der initialen Transkription (107):

Extrahieren der Sequenz einzelner Zeichen (186), die das korrekte Buchstabieren der bestimmten Phrase (182) bereitstellen, aus der initialen Transkription (107);
Erstellen einer korrigierten Phrase für die Fehlerkennung der bestimmten Phrase (182) aus der extrahierten Sequenz einzelner Zeichen (186);
Extrahieren der Fehlerkennung der bestimmten Phrase (182) aus der initialen Transkription (107); und
Normalisieren der initialen Transkription (107), um eine finale Transkription (104) für die Äußerung (101) zu erlangen, indem die extrahierte Fehlerkennung der bestimmten Phrase (182) durch die korrigierte Phrase ersetzt wird, die aus der extrahierten Sequenz einzelner Zeichen (186) erstellt wurde.

**2.** Verfahren (500) nach Anspruch 1, wobei:

das Empfangen der Audiodaten (102) das Empfangen der Audiodaten (102), während der Benutzer die Äußerung (101) ausspricht, umfasst;

das Durchführen einer Spracherkennung an den Audiodaten (102) das Durchführen einer Streaming-Spracherkennung an den Audiodaten (102), während die Audiodaten (102) empfangen werden, um als Ausgabe von dem ASR-Modell (142) Streaming-Spracherkennungsergebnisse zu erzeugen, umfasst; und

die Vorgänge ferner das Bereitstellen jedes als Ausgabe von dem ASR-Modell (142) erzeugten Streaming-Spracherkennungsergebnisses zum Anzeigen auf einem Bildschirm (115), der mit der Datenverarbeitungshardware (610) kommuniziert, umfassen.

**3.** Verfahren (500) nach einem der Ansprüche 1 oder 2, wobei die Vorgänge ferner Anzeigen eines Teil-Spracherkennungsergebnisses einschließlich der Fehlerkennung der bestimmten Phrase (182) auf dem Bildschirm (115) umfassen, bevor der Benutzer die Sequenz einzelner Zeichen (186) ausspricht, die das Buchstabieren der bestimmten Phrase (182) beinhalten.

**4.** Verfahren (500) nach einem der vorhergehenden Ansprüche, wobei das Detektieren der Buchstabierungsstruktur (103) Ausführen eines gewichteten endlichen Zustandswandlers (wFST) umfasst, der eine Buchstabierungskomponente (310) aufweist, die konfiguriert ist, um die Buchstabierungsstruktur (103) in der initialen Transkription (107) durch das Identifizieren eines oder mehrerer initiierender Auslösewörter in der initialen Transkription (107) vor der Fehlerkennung der bestimmten Phrase (182) zu detektieren.

**5.** Verfahren (500) nach Anspruch 4, wobei das eine oder die mehreren initiierenden Auslösewörter und das eine oder die mehreren Buchstabierungsauslösewörter (184) einen vordefinierten Buchstabierungsbefehl bilden.

**6.** Verfahren (500) nach Anspruch 4 oder 5, wobei das Detektieren der Buchstabierungsstruktur (103) in der initialen Transkription (107) ferner auf dem Identifizieren der Sequenz einzelner Zeichen (186) in der initialen Transkription (107) nach dem Identifizieren des einen oder der mehreren Buchstabierungsauslösewörter (184) basiert.

**7.** Verfahren (500) nach einem der Ansprüche 1 bis 6, wobei die Vorgänge nach dem Erstellen der korrigierten Phrase aus der extrahierten Sequenz einzelner Zeichen (186) ferner das Anwenden eines Großschreibungsnormalisierers (156) umfassen, um den ersten Buchstaben mindestens eines Wortes in der korrigierten Phrase großzuschreiben.

**8.** Verfahren (500) nach einem der Ansprüche 1-7, wobei:

die bestimmte Phrase (182), die der Benutzer in der Äußerung (101) ausspricht, zwei oder mehr bestimmte Wörter umfasst;

die Sequenz einzelner Zeichen (186), die das korrekte Buchstabieren der bestimmten Phrase (182) bereitstellen, zwei oder mehr Spannen aufeinanderfolgender einzelner Zeichen (186) umfassen, von denen jede das korrekte Buchstabieren für eines der zwei oder der mehreren bestimmten Wörter bereitstellt; und

die durch den Benutzer ausgesprochene Äußerung (101) ferner umfasst, dass der Benutzer zwischen jedem benachbarten Paar der zwei oder der mehreren Spannen aufeinanderfolgender einzelner Zeichen (186) einen Leerzeichen-Befehl (185) ausspricht.

**9.** Verfahren (500) nach Anspruch 8, wobei:

die initiale Transkription (107) ferner ein Leerzeichen-Token (185t), das zwischen jedes benachbarte Paar der zwei oder der mehreren Spannen aufeinanderfolgender einzelnen Zeichen (186) der Sequenz einzelner Zeichen (186) eingefügt ist, umfasst; und

das Erstellen der korrigierten Phrase aus der extrahierten Sequenz einzelner Zeichen (186) Folgendes umfasst:

für jede Spanne aufeinanderfolgender einzelner Zeichen (186) Zusammenfügen der einzelnen Zeichen (186), um das entsprechende eine der zwei oder der mehreren bestimmten Wörter zu bilden; und

Ersetzen jedes Leerzeichen-Tokens (185t) in der initialen Transkription (107) durch ein Leerzeichen.

**10.** Verfahren (500) nach einem der Ansprüche 1 bis 9, wobei die Fehlerkennung der bestimmten Phrase (182) ein oder mehrere Wörter umfasst.

**11.** Verfahren (500) nach einem der Ansprüche 1 bis 10, wobei das Extrahieren der Fehlerkennung der bestimmten Phrase (182) auf einem Editierabstand zwischen der Sequenz einzelner Zeichen (186) in der initialen Transkription (107) und der Fehlerkennung der bestimmten Phrase (182) basiert.

**12.** Verfahren (500) nach einem der Ansprüche 1 bis 11, wobei das Ermitteln der Fehlerkennung der bestimmten Phrase (182) Folgendes umfasst:

Bestimmen eines entsprechenden Editierabstands zwischen der Sequenz einzelner Zeichen (186) und jeder Wortspanne von mehreren Wortspannen unterschiedlicher Länge in der initialen Transkription (107), wobei die mehreren Wortspannen der Sequenz einzelner Zeichen (186) vorausgehen; und
Identifizieren der Wortspanne der mehreren Wortspannen unterschiedlicher Länge, die den kürzesten entsprechenden Editierabstand zur Fehlerkennung der bestimmten Phrase (182) aufweist.

**13.** Verfahren (500) nach Anspruch 12, wobei der entsprechende Editierabstand einen entsprechenden Levenshtein-Abstand umfasst, der für jede der mehreren Wortspannen mittels einer einzigen Berechnung dynamisch ermittelt wird.

**14.** Verfahren (500) nach einem der Ansprüche 1 bis 13, wobei das Detektieren der Buchstabierungsstruktur (103) in der initialen Transkription (107) und das Normalisieren der initialen Transkription (107) zum Erlangen der finalen Transkription (104) erfolgt, ohne dass eine Benutzereingabe empfangen wird, nachdem der Benutzer die Äußerung (101) ausgesprochen hat.

**15.** System (100), umfassend:

Datenverarbeitungshardware (610); und
Speicher-Hardware (620), die mit der Datenverarbeitungshardware (610) kommuniziert und Anweisungen speichert, die bei Ausführung auf der Datenverarbeitungshardware (610) die Datenverarbeitungshardware (610) veranlassen, das Verfahren nach einem der vorstehenden Ansprüche durchzuführen.

**Revendications**

**1.** Procédé mis en œuvre par ordinateur (500) qui, lorsqu'il est exécuté sur un matériel de traitement de données (610), amène le matériel de traitement de données (610) à réaliser des opérations comprenant :

la réception de données audio (102) caractérisant un énoncé (101) prononcé par un utilisateur, l'énoncé (101) comprenant une phrase particulière (182) et une séquence de caractères individuels (186) qui fournissent une orthographe correcte de la phrase particulière (182) prononcée après la phrase particulière (182) ;
le traitement, à l'aide d'un modèle de reconnaissance vocale automatique (ASR), de données audio (102) pour générer une transcription initiale (107) pour l'énoncé (101), la transcription initiale (107) comprenant une mauvaise reconnaissance de la phrase particulière (182) par le modèle ASR (142) suivie de la séquence de caractères individuels (186) qui fournissent l'orthographe correcte de la phrase particulière (182) ;
la détection d'une structure orthographique (103) dans la transcription initiale (107) après la mauvaise reconnaissance de la phrase particulière (182), dans lequel la détection de la structure orthographique (103) comprend l'exécution d'un transducteur à états finis pondérés (wFST) ayant un composant orthographique (310) configuré pour détecter la structure orthographique (103) dans la transcription initiale (107) en identifiant un ou plusieurs mots déclencheurs orthographiques (184) dans la transcription initiale (107) après la mauvaise reconnaissance de la phrase particulière (182) ; et
en réponse à la détection de la structure orthographique (103) dans la transcription initiale (107) :

l'extraction, à partir de la transcription initiale (107), de la séquence de caractères individuels (186) qui fournissent l'orthographe correcte de la phrase particulière (182) ;
la construction d'une phrase corrigée pour la mauvaise reconnaissance de la phrase particulière (182) à partir de la séquence extraite de caractères individuels (186) ;
l'extraction, à partir de la transcription initiale (107), de la mauvaise reconnaissance de la phrase particulière (182) ; et
la normalisation de la transcription initiale (107) pour obtenir une transcription finale (104) pour l'énoncé (101) en remplaçant la mauvaise reconnaissance extraite de la phrase particulière (182) par la phrase corrigée construite à partir de la séquence extraite de caractères individuels (186).

2.  Procédé (500) selon la revendication 1, dans lequel :

    la réception des données audio (102) comprend la réception des données audio (102) pendant que l'utilisateur prononce l'énoncé (101) ;
    la réalisation de la reconnaissance vocale sur les données audio (102) comprend la réalisation de la reconnaissance vocale en continu sur les données audio (102) au fur et à mesure que les données audio (102) sont reçues pour générer, en sortie à partir du modèle ASR (142), des résultats de reconnaissance vocale en continu ; et
    les opérations comprennent en outre la fourniture de chaque résultat de reconnaissance vocale en continu généré en sortie à partir du modèle ASR (142) pour affichage sur un écran (115) en communication avec le matériel de traitement de données (610).

3.  Procédé (500) selon l'une quelconque des revendications 1 ou 2, dans lequel les opérations comprennent en outre l'affichage d'un résultat de reconnaissance vocale partielle comportant la mauvaise reconnaissance de la phrase particulière (182) sur l'écran (115) avant que l'utilisateur ne prononce la séquence de caractères individuels (186) comprenant l'orthographe de la phrase particulière (182).

4.  Procédé (500) selon une quelconque revendication précédente, dans lequel la détection de la structure orthographique (103) comprend l'exécution d'un transducteur à états finis pondérés (wFST) ayant un composant orthographique (310) configuré pour détecter la structure orthographique (103) dans la transcription initiale (107) en identifiant un ou plusieurs mots déclencheurs initiaux dans la transcription initiale (107) précédant la mauvaise reconnaissance de la phrase particulière (182).

5.  Procédé (500) selon la revendication 4, dans lequel les un ou plusieurs mots déclencheurs initiaux et les un ou plusieurs mots déclencheurs orthographiques (184) forment une commande d'orthographe prédéfinie.

6.  Procédé (500) selon la revendication 4 ou 5, dans lequel la détection de la structure orthographique (103) dans la transcription initiale (107) est en outre sur la base de l'identification de la séquence de caractères individuels (186) dans la transcription initiale (107) après l'identification des un ou plusieurs mots déclencheurs orthographiques (184).

7.  Procédé (500) selon l'une quelconque des revendications 1 à 6, dans lequel les opérations comprennent en outre, après la construction de la phrase corrigée à partir de la séquence extraite de caractères individuels (186), l'application d'un normalisateur de capitalisation (156) pour mettre en majuscule la première lettre d'au moins un mot dans la phrase corrigée.

8.  Procédé (500) selon l'une quelconque des revendications 1 à 7, dans lequel :

    la phrase particulière (182) prononcée par l'utilisateur dans l'énoncé (101) comprend deux ou plus mots particuliers ;
    la séquence de caractères individuels (186) qui fournit l'orthographe correcte de la phrase particulière (182) comprend deux ou plus segments de caractères individuels consécutifs (186) qui fournissent chacun une orthographe correcte pour l'un des deux ou plus mots particuliers ; et
    l'énoncé (101) prononcé par l'utilisateur comprend en outre l'utilisation d'une commande d'espace (185) entre chaque paire adjacente de deux ou plus segments de caractères individuels consécutifs (186).

9.  Procédé (500) selon la revendication 8, dans lequel :

    la transcription initiale (107) comprend en outre un jeton d'espace (185t) inséré entre chaque paire adjacente des deux ou plus segments de caractères individuels consécutifs (186) de la séquence de caractères individuels (186) ; et
    la construction de la phrase corrigée à partir de la séquence extraite de caractères individuels (186) comprend :

        pour chaque séquence de caractères individuels consécutifs (186), le fait de joindre les caractères individuels (186) pour former le mot correspondant parmi les deux ou plus mots particuliers ; et
        le remplacement de chaque jeton d'espace (185t) dans la transcription initiale (107) par un espace vide.

**10.** Procédé (500) selon l'une quelconque des revendications 1 à 9, dans lequel la mauvaise reconnaissance de la phrase particulière (182) comprend un ou plusieurs mots.

**11.** Procédé (500) selon l'une quelconque des revendications 1 à 10, dans lequel l'extraction de la mauvaise reconnaissance de la phrase particulière (182) est sur la base d'une distance d'édition entre la séquence de caractères individuels (186) dans la transcription initiale (107) et la mauvaise reconnaissance de la phrase particulière (182).

**12.** Procédé (500) selon l'une quelconque des revendications 1 à 11, dans lequel l'extraction de la mauvaise reconnaissance de la phrase particulière (182) comprend :

la détermination d'une distance d'édition correspondante entre la séquence de caractères individuels (186) et chaque segment de mots de segments de mots multiples de longueurs différentes dans la transcription initiale (107), les segments de mots multiples précédant la séquence de caractères individuels (186) ; et
l'identification du segment de mots de segments de mots multiples de longueurs différentes qui a une distance d'édition correspondante la plus courte à la mauvaise reconnaissance de la phrase particulière (182).

**13.** Procédé (500) selon la revendication 12, dans lequel la distance d'édition correspondante comprend une distance de Levenshtein correspondante calculée dynamiquement pour chacun des segments de mots multiples par le biais d'un seul calcul.

**14.** Procédé (500) selon l'une quelconque des revendications 1 à 13, dans lequel la détection de la structure orthographique (103) dans la transcription initiale (107) et la normalisation de la transcription initiale (107) pour obtenir la transcription finale (104) se produisent sans recevoir aucune entrée de l'utilisateur après que l'utilisateur a terminé de prononcer l'énoncé (101).

**15.** Système (100) comprenant :

un matériel de traitement de données (610) ; et
un matériel de mémoire (620) en communication avec le matériel de traitement de données (610) et stockant des instructions qui, lorsqu'elles sont exécutées sur le matériel de traitement de données (610), amènent le matériel de traitement de données (610) à réaliser le procédé selon une quelconque revendication précédente.

FIG. 1

FIG. 2A

200,200b

we're
252c

we
252a

deer
252d

254a

are
252b

coming
252e

come
252f

hunting
252h

254b

at
252g

about
252i

scouts
252j

254c

11:30
252k

7:30
252l

254d

# FIG. 2B

FIG. 3

200,
300

Penalty weight

340
Word

302A

302B

A  Trigger for
   spoken
   words

B  Word

C  Trigger for
   spelling
   letters

D  Letter Loop

Spelling
Component
310

181, 320

330

184, 350

360

FIG. 4

400  405  410  415  420  425  430

500

Receiving Audio Data

502

Processing The Audio Data Using An ASR Model To Generate An Initial Transcription

504

Detecting A Spelling Structure In The Initial Transcription

506

Extracting A Sequence Of Individual Characters

508

Constructing A Corrected Phrase From The Sequence Of Individual Characters

510

Replacing A Misrecognized Phrase With The Corrected Phrase In The Initial Transcription

512

Normalizing The Initial Transcription To Obtain A Final Transcription

514

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017263248 A1